# EUROPEAN PATENT APPLICATION

(11) **EP 1 916 088 A2**
(43) Date of publication of application: **30.04.2008**
(21) Application number: 07119108.4
(22) Date of filing: 23.10.2007
(51) Int. Cl.: B29C 47/02, B29C 47/92, B29C 47/08

(54) **Automatic ramping method and system for extrusion coating wire**

(30) Priority: 26.10.2006 US 586874
(71) Applicant: Delphi Technologies, Inc., Troy, Michigan 48007 (US)
(72) Inventor: Shipman, Yvette M., Cortland, OH 44410 (US); Thomas, James C., Vienna, OH 44473 (US)
(74) Representative: Denton, Michael John

(57) **Abstract**

An automatic computer operated ramping method and system (10) for extrusion coating wire (12) by an extrusion coating system has an extruder that is driven by an extruder motor (24) and a capstan (20) that draws a wire through the extruder (26) and that is driven by a capstan motor. The automatic ramping method and system determines the speed of the capstan motor while monitoring the extruder head pressure of the extruder with a pressure gage, accelerates the speed of the capstan motor and the speed of the extruder motor while continuously monitoring the extruder head pressure so long as the extruder head pressure is below a predetermined limit, and stops the acceleration of the speed of the capstan motor and the speed of the extruder motor when the extruder head pressure exceeds the predetermined pressure limit, and resumes the acceleration when the extruder head pressure is below the predetermined pressure limit until a desired production speed is reached.

## Description

### Technical field

This invention relates generally to a method and system for extrusion coating wire and more particularly to an automatic ramping method and system for extrusion coating wire.

### Background of the Invention

Currently, the extrusion coating of insulated electric wire is ramped, i.e. brought up to a desired production speed, with an automatic ramping method and system that uses a combination of extruder speed, capstan speed and wire size to achieve the correct ratio of coating compound delivery to wire speed. If excessive extruder head pressure is encountered during ramping, the extrusion coating system shuts down resulting in considerable scrap and lost production time.

Higher viscosity coating materials such as a polyphenylene ether or polyphenylene polyethylene copolymer [PPE] extrusion compounds may cause excessive extruder head pressure when the current automatic ramping method and system is used. Consequently, ramping an extrusion coating system that uses higher viscosity materials, such as PPE extrusion compounds, requires a manual ramping method and system in which the extruder speed is increased manually in steps up to a desired full production speed to avoid excessive extruder head pressure that shuts the extrusion coating system down.

### Summary of the Invention

This invention provides an automatic ramping method and system for extrusion coating wire at a desired production speed using a wide range of coating materials, including viscous materials, such as PPE coating compounds. The automatic ramping method and system controls the acceleration of the extruder and capstan speeds based on maintaining a normal extruder head pressure and wire size. Once started, the automatic ramping method and system proceeds until a desired full production speed is achieved without any danger of a shut down.

The automatic ramping method and system preferably includes an enhancement for increasing production speed.

### Brief Description of the Drawings

Figure 1 is a schematic diagram of an extrusion coating system used to explain an automatic ramping method and system embodying the invention;

Figure 2 is a section taken substantially along the line 2-2 of figure 1 looking in the direction of the arrows;

Figure 3 is a schematic control diagram of a portion of figure 1; and

Figure 4 is a program flow chart for an automatic ramping method and system for extrusion coating wire at a desired production speed.

### Description of the Preferred Embodiments

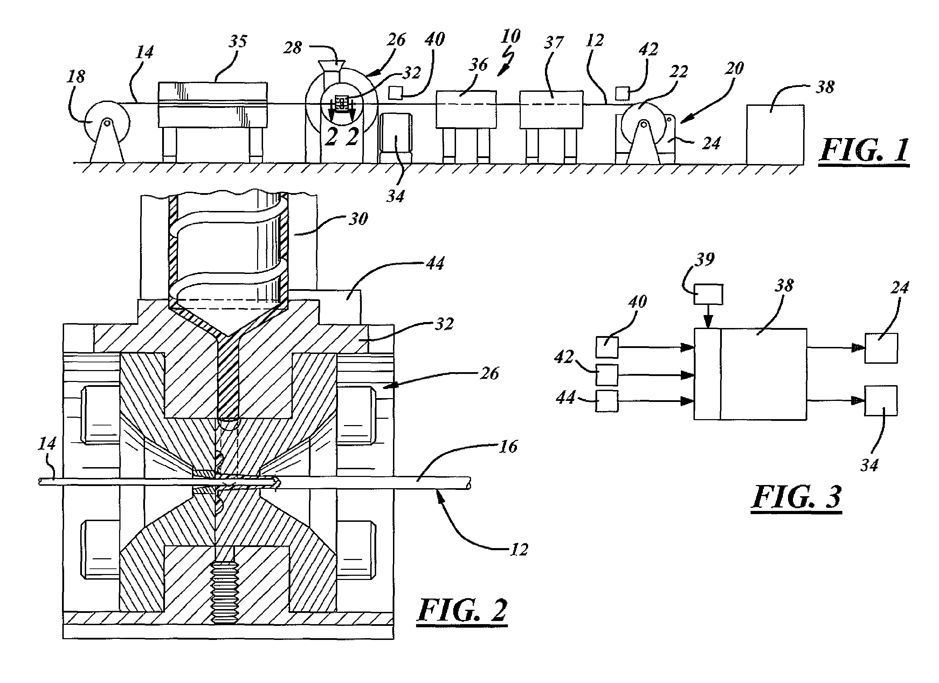

Referring now to figures 1 and 2, a system 10 for extrusion coating an insulated electric wire 12 is illustrated. Electric wire 12 comprises an electrically conductive wire core 14, usually made of copper or a copper alloy and an insulation jacket 16 that is commonly made of an organic compound that provides good electrical insulation.

Electric wire 12 is commonly insulated in an insulation coating method and system in which the bare electrically conductive wire core 14 is drawn from a reel 18 through an extrusion coating system, such as extrusion coating system 10, by a capstan 20 that winds the finished insulated electric wire 12 on a drum 22 for shipment. The capstan 20 is driven by an electric motor 24. As the wire core 14 is drawn through the extrusion coating system 10, an extruder generally indicated at 26 coats the wire core 14 with the insulation jacket 16.

Extruder 26 comprises a conventional hopper 28, a rotating extrusion screw 30 and an extrusion die 32. The hopper 28 feeds granular material into the extrusion screw 30 where the material is heated and compressed into a fluent plastic material that is forced through the extrusion die 32 where the fluent plastic material is coated around the conductive wire core 14 that is being pulled through the extrusion die 32 by the capstan 20. The rotating extrusion screw 30 is driven by an electric motor 34.

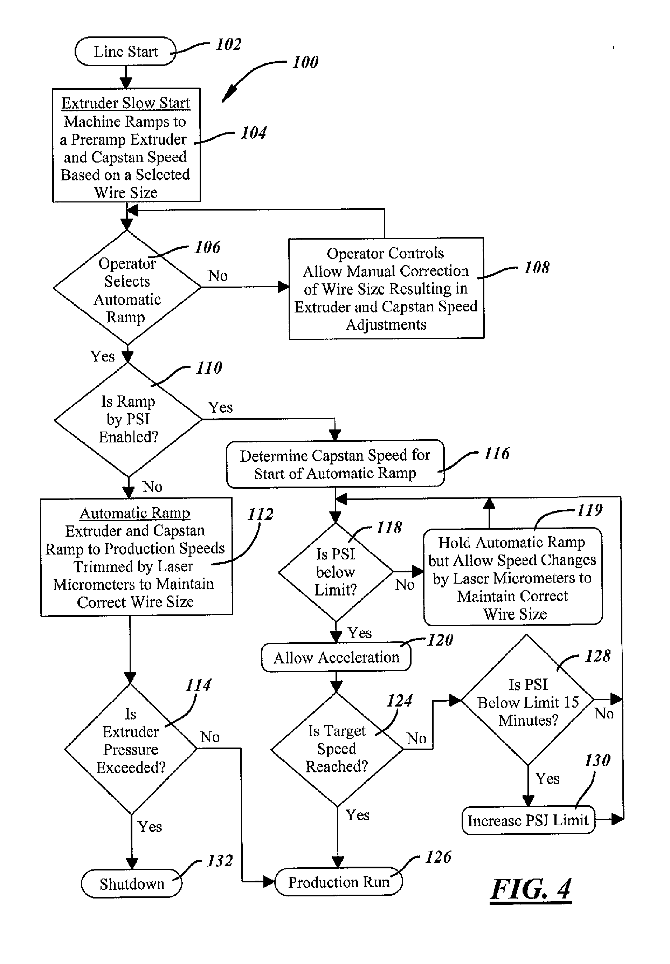

The extrusion coating system 10 may include a heater 35 for heating the conductor wire core 14 to the temperature of the fluent plastic material. The extrusion coating system 10 may also include a curing oven 36 and a cooling tower 37. The extrusion coating system 10 is controlled by a computer operated controller 38. During operation, the computer operated controller 38 controls the speeds of the capstan motor 24 and the extrusion screw motor 34. The computer operated controller 38 receives inputs from external controls including operator control 39 and continuous inputs from size gages 40 and 42 for reading wire size and a pressure gage 44 at the extrusion die 32 for reading extruder head pressure as shown in the schematic control diagram of figure 3. Two laser size gages 40 and 42 for reading wire size in micrometers are preferred for monitoring wire size after the coated wire exits extruder 26 and after the coated wire exits cooling tower 37 and shrinks.

Referring now to figure 4, a program flow chart 100 illustrates a computer operated ramping method and system for the extrusion coating wire at a desired production speed. The first operation of the computer operated ramping method for the extrusion coating system 10, indicated at 102 in figure 4, is to select a wire size and start the extrusion coating system 10 by operator control 39 shown in figure 3. The computer operated controller 38 then executes a slow start 104 whereby the extruder motor 34 ramps up to a preramp extruder speed based on a percentage of full extruder speed at the desired full production speed. The capstan speed of the capstan motor 24 follows a ratio adjusted by the selected wire size. During the slow start process the operator may manually correct wire size by adjusting operator control 39 as indicated at 108 resulting in speed adjustments to motors 24 and 34. The slow start process allows wire splices or coating compound irregularities to get through the extrusion coating system 10 before starting an automatic ramp to a full production speed. (A slow start speed is generally ¼ of a desired full production speed).

When the operator is content with the wire size and certain that any splices have passed though the extrusion coating system 10, the operator is then required to select automatic ramp at 106 via operator control 39.

When automatic ramp is selected and the ramp by PSI is not enabled at 110, the computer operated controller 38 ramps the extrusion coating system 10 to the desired full production line speed (generally about 3500 feet per minute) while continuously receiving inputs from size gages 40 and 42 and pressure gage 44. Size gages 40 and 42 continuously monitor the wire size and control the speeds of the extruder motor 34 and capstan motor 24 to maintain the selected wire size during the automatic ramp. Pressure gage 44 continuously monitors extruder head pressure at 114. If excessive extruder head pressure is encountered anywhere during the automatic ramp before the full production speed is reached for the production run at 126, the extrusion coating system 10 is shut down at 132 resulting in considerable scrap and lost production time as indicated above. The fault is preferably annunciated when the extrusion coating system 10 is shut down.

The automatic ramp described above represents a current method and system. As an alternative, the operator can select ramp by PSI at 110 in which case, the desired full production speed will be reached for the production run at 126 without any danger of a shut down by limiting extruder head pressure which is measured by pressure gage 44.

When the automatic ramp is PSI enabled at 110, the automatic ramp commences by determining the capstan speed at 116 while monitoring the extruder head pressure at pressure gage 44. If the extruder head pressure is not below a predetermined pressure limit, the automatic ramp is held at 119 while allowing for automatic extruder and capstan motor speed changes to maintain correct wire size. The automatic ramp is held up until the extruder head pressure is below the predetermined pressure limit which is approximately 75 percent of the shut down value but can be changed based on extruder size, compound characteristics and pressure lag.

When the extruder head pressure is below the predetermined pressure limit at 118, the computer operated control 38 accelerates the speeds of the capstan and extruder motors 24 and 34 at 120 while continuously monitoring the extruder head pressure at 128. The acceleration continues until the desired full production speed is reached at 124 so long as the predetermined pressure is not exceeded in which case the production run commences at 126.

If the extruder head pressure exceeds the predetermined pressure limit at 128 before the desired full production speed is achieved at 124, the automatic ramp recycles back to 118 and is held at 119 until the extruder head pressure is below the predetermined pressure limit at 118 in which case the acceleration is resumed at 120. The recycling back to 118 may be repeated several times before the desired full production speed is reached at 124 and the production run commences at 126. In any event, extrusion coating of the wire will ultimately be achieved without any danger of a shut down.

The computer operated controller 38 preferably allows a higher production speed when the automatic ramp is PSI enabled at 110 and the extruder head pressure is stabilized. When the automatic ramp is PSI enabled at 110 and the extruder head pressure is below the predetermined pressure limit at 118, the extruder head pressure is continuously monitored by pressure gage 44 at 128 during acceleration at 124. If the extruder head pressure remains below the predetermined pressure limit for a predetermined time then the pressure limit is increased in the computer operated controller at 130 and the automatic ramp returns to operation 118 and resumes acceleration at 120 using the new higher pressure limit. The new higher pressure limit results in achieving a higher production speed for the production run at 126 when the extruder head pressure is stabilized at or below the initial pressure limit. Thus the automatic ramp may include an enhancement for increasing production speed when it is PSI enabled.

In summary, when PSI software enabled, the automatic ramp method and system monitors the extruder head pressure continuously and delays the ramp if an excessive extruder head pressure is detected. The delay allows the extruder head pressure to normalize and drop as the flow of coating material is optimized in the extruder. If the extruder head pressure remains normal, the ramp continues until complete. A unique feature of this ramp method and system is the ability to automatically ramp a high speed extrusion coating of wire without exceeding high extrusion head pressures while maintaining wire size. The method and system holds the extruder speed back in the automatic ramp until a normalized extruder head pressure is achieved, then allows the automatic ramp to resume acceleration as long as the extruder head pressure is below the predetermined pressure limit.

Benefits of the PSI enabled automatic ramp include increased uptime, reduced maintenance downtime, an ability to automatically ramp high viscosity coating extrusions, achieving coated wire size faster, and achieving a desired full production speed without danger of a shut down.

It will be readily understood by those persons skilled in the art that the present invention is susceptible of broad utility and application. Many embodiments and adaptations of the present invention other than those described above, as well as many variations, modifications and equivalent arrangements, will be apparent from or reasonably suggested by the present invention and the foregoing description, without departing from the substance or scope of the present invention. Accordingly, while the present invention has been described herein in detail in relation to its preferred embodiment, it is to be understood that this disclosure is only illustrative and exemplary of the present invention and is made merely for purposes of providing a full and enabling disclosure of the invention. The foregoing disclosure is not intended or to be construed to limit the present invention or otherwise to exclude any such other embodiments, adaptations, variations, modifications and equivalent arrangements, the present invention being limited only by the following claims and the equivalents thereof.

## Claims

1. An automatic computer operated ramping method for extrusion coating wire by an extrusion coating system having an extruder that is driven by an extruder motor and a capstan that draws a wire through the extruder and that is driven by a capstan motor, the automatic ramping method comprising:
determining the speed of the capstan motor while monitoring the extruder head pressure of the extruder, and
accelerating the speed of the capstan motor and the speed of the extruder motor while continuously monitoring the extruder head pressure so long as the extruder head pressure is below a predetermined pressure limit.

2. The automatic computer operated ramping method as defined in claim 1 wherein the speed of the capstan motor and the speed of the extruder motor are accelerated until a desired full production speed is reached so long as the extruder head pressure remains below the predetermined pressure limit.

3. The automatic computer operated ramping method as defined in claim 1 wherein accelerating the speed of the capstan motor and the speed of the extruder motor is automatically held up whenever the extruder head pressure exceeds below the predetermined pressure limit.

4. The automatic computer operated ramping method as defined in claim 3 wherein, the speed of the capstan motor and the speed of the extruder motor are automatically changed to maintain wire size when accelerating the speed of the capstan motor and the speed of the extruder motor is being held up.

5. An automatic computer operated ramping method for extrusion coating wire by an extrusion coating system having an extruder that is driven by an extruder motor and a capstan that draws a wire through the extruder and that is driven by a capstan motor, the automatic ramping method comprising:
determining the speed of the capstan motor while monitoring the extruder head pressure of the extruder, and
accelerating the speed of the capstan motor and the speed of the extruder motor while continuously monitoring the extruder head pressure so long as the extruder head pressure is below a predetermined pressure limit,
holding up acceleration of the speed of the capstan motor and the speed of the extruder motor whenever the head pressure exceeds the predetermined pressure limit, and
resuming acceleration of the speed of the capstan motor and the speed of the extruder motor when the head pressure is below the predetermined pressure limit.

6. The automatic computer operated ramping method as defined in claim 5 wherein the speed of the capstan motor and the speed of the extruder motor are accelerated in one or more steps until a desired full production speed is reached.

7. The automatic computer operated ramping method as defined in claim 6 wherein the speed of the capstan motor and the speed of the extruder motor are automatically changed to maintain wire size whenever accelerating the speed of the capstan motor and the speed of the extruder motor is being held up.

8. An automatic computer operated ramping method for extrusion coating wire by an extrusion coating system having an extruder that is driven by an extruder motor and a capstan that draws a wire through the extruder and that is driven by a capstan motor, the automatic ramping method comprising:
determining the speed of the capstan motor while monitoring the extruder head pressure of the extruder,
accelerating the speed of the capstan motor and the speed of the extruder motor while continuously monitoring the extruder head pressure so long as the extruder head pressure is below a predetermined pressure limit,
increasing the predetermined pressure limit to a higher pressure limit if the extruder head pressure remains below the predetermined pressure limit for a predetermined time, and
resuming acceleration of the speed of the capstan motor and the extruder motor so long as the extruder head pressure is below the higher pressure limit.

9. The computer operated automatic ramping method as defined in claim 8 wherein the resumed acceleration of the speed of the capstan motor and the speed of the extruder motor is continued until a desired full production speed is reached so long as the extruder head pressure remains below the higher pressure limit.

10. The computer operated automatic ramping method as defined in claim 9 wherein the resumed acceleration of the speed of the capstan motor and the speed of the extruder motor is held up whenever the extruder head pressure exceeds the higher pressure limit.

11. The computer operated automatic ramping method as defined in claim 10 wherein the speed of the capstan motor and the speed of the extruder motor are automatically changed to maintain wire size when accelerating the speed of the capstan motor and the speed of the extruder motor are held up.

12. An automatic ramping system for an extrusion coating system for producing coated wire, the extrusion coating system having an extruder that is driven by an extruder motor and a capstan that draws wire through the extruder and that is driven by a capstan motor, the automatic ramping system comprising:
a pressure gage for measuring extruder head pressure,
at least one size gage for measuring size of the coated wire, and
a computer operated controller for controlling the speed of the extruder motor and the speed of the capstan motor,
the computer operated controller receiving inputs from external controls including continuous inputs from the gage and the at least one micrometer,
the computer operated controller determining the speed of the capstan motor while monitoring the extruder head pressure of the extruder via the gage, and
the computer operated controller accelerating the speed of the capstran motor and the speed of the extruder motor while continuously monitoring the extruder head pressure via the pressure gage so long as the extruder head pressure is below a predetermined pressure limit.

13. The automatic ramping system as defined in claim 12 wherein the computer operated controller accelerates the speed of the capstran motor and the speed of the extruder motor until a desired full production speed is reached so long as the extruder head pressure remains below the predetermined pressure limit.

14. The automatic ramping system as defined in claim 12 wherein the computer operated controller stops accelerating the speed of the capstan motor and the speed of the extruder motor whenever the extruder head pressure exceeds the predetermined pressure limit.

15. The automatic ramping system as defined in claim 14 wherein the computer operated controller continuously monitors the size of the coated wire via the at least one laser gage and automatically changes the speed of the capstan motor and the speed of the extruder motor to maintain wire size when it stops accelerating the speed of the capstan motor and the speed of the extruder motor.

16. An automatic ramping system for an extrusion coating system for producing coated wire, the extrusion coating system having an extruder that is driven by an extruder motor and a capstan that draws wire through the extruder and that is driven by a capstan motor, the automatic ramping system comprising:
a pressure gage for measuring extruder head pressure,
at least one size gage for measuring size of the coated wire, and
a computer operated controller for controlling the speed of the extruder motor and the speed of the capstan motor,
the computer operated controller receiving inputs from external controls including continuous inputs from the pressure gage and the at least one size gage,
the computer operated controller determining the speed of the capstan motor while monitoring the extruder head pressure of the extruder via the pressure gage, and
the computer operated controller accelerating the speed of the capstran motor and the speed of the extruder motor while continuously monitoring the extruder head pressure via the pressure gage so long as the extruder head pressure is below a predetermined pressure limit,
the computer operated controller stopping the acceleration of the speed of the capstan motor and the speed of the extruder motor whenever the extruder head pressure exceeds the predetermined pressure limit and resuming acceleration of the speed of the capstan motor and the speed of the extruder motor when the extruder head pressure is below the predetermined pressure limit

17. The automatic ramping system as defined in claim 16 wherein the computer operated controller accelerates the speed of the capstan motor and the speed of the extruder motor in one or more steps until a desired full production speed is reached.

18. The automatic ramping system as defined in claim 17 wherein the computer operated controller continuously monitors the size of the coated wire via the at least one size gage and automatically changes the speed of the capstan motor and the speed of the extruder motor to maintain wire size when the computer operated controller stops accelerating the speed of the capstan motor and the speed of the extruder motor.

19. An automatic ramping system for an extrusion coating system for producing coated wire, the extrusion coating system having an extruder that is driven by an extruder motor and a capstan that draws wire through the extruder and that is driven by a capstan motor, the automatic ramping system comprising:
a pressure gage for measuring extruder head pressure,
at least one size gage for measuring size of the coated wire, and
a computer operated controller for controlling the speed of the extruder motor and the speed of the capstan motor,
the computer operated controller receiving inputs from external controls including continuous inputs from the pressure gage and the at least one size gage,
the computer operated controller determining the speed of the capstan motor while monitoring the extruder head pressure of the extruder via the pressure gage, and
the computer operated controller accelerating the speed of the capstan motor and the speed of the extruder motor while continuously monitoring the extruder head pressure via the pressure gage so long as the extruder head pressure is below a predetermined pressure limit,
the computer operated controller increasing the predetermined pressure limit to a higher pressure limit if the extruder head pressure remains below the predetermined pressure limit for a predetermined time, and
resuming acceleration of the speed of the capstan motor and the extruder motor so long as the extruder head pressure is below the higher pressure limit.

20. The automatic ramping system as defined in claim 19 wherein the computer operated controller accelerates the speed of the capstan motor and the speed of the extruder motor in a plurality of steps until a desired full production speed is reached.

21. The automatic ramping system as defined in claim 20 wherein the computer operated controller stops accelerating the speed of the capstan motor and the speed of the extruder motor whenever the extruder head pressure exceeds the higher pressure limit.

22. The automatic ramping method as defined in claim 21 wherein the computer operated controller continuously monitors the size of the coated wire via the at least one pressure gage and automatically changes the speed of the capstan motor and the speed of the extruder motor to maintain wire size when the computer operated controller stops accelerating the speed of the capstan motor and the speed of the extruder motor.
